# EUROPÄISCHE PATENTSCHRIFT

(11) **EP 4 558 744 B1**
(45) Veröffentlichungstag und Bekanntmachung des Hinweises auf die Patenterteilung: **08.07.2026**
(21) Anmeldenummer: 23742247.2
(22) Anmeldetag: 13.07.2023
(51) Int. Cl.: F16H 1/46, F16H 57/08

(54) **PLANETENGETRIEBEBAUGRUPPE**
PLANETARY GEAR ASSEMBLY
ENSEMBLE TRAIN PLANÉTAIRE

(30) Priorität: 22.07.2022 DE 102022118426
(43) Veröffentlichungstag der Anmeldung: 28.05.2025
(73) Patentinhaber: AUMA Riester GmbH & Co. KG, 79379 Müllheim (DE)
(72) Erfinder: WASSER, Tobias, 79102 Freiburg (DE); HOFMANN, Benjamin, 79423 Heitersheim (DE); WIRTZ, Anna, 57482 Wenden (DE)
(74) Vertreter: Mertzlufft-Paufler, Cornelius
(86) Internationale Anmeldenummer: PCT/EP2023/069461
(87) Internationale Veröffentlichungsnummer: WO 2024/017755

(56) Entgegenhaltungen:
- EP-A1- 2 479 458
- EP-A1- 4 006 379
- WO-A1-2016/165706
- WO-A2-2012/013594
- JP-A- 2018 066 468
- US-A1- 2020 088 268

## Beschreibung

Die Erfindung betrifft eine Planetengetriebebaugruppe umfassend zumindest zwei Planetengetriebestufen mit jeweils mit einem Sonnenrad, einem Hohlrad und einem Planetenradträger mit mehreren, vorzugsweise drei, Planetenrädern.

Solche Planetengetriebebaugruppen sind bekannt und werden beispielsweise bei Stellantrieben, die zur Betätigung von Armaturen oder Ventilen geeignet sind, eingesetzt.

Um ein gewünschtes Übersetzungsverhältnis zu erreichen ist es üblich, Planetengetriebebaugruppen mit mehreren Getriebestufen in Stapelanordnung herzustellen, wobei jede Getriebestufe als ein Planetengetriebe ausgebildet ist, wobei eine solche Getriebestufe im Folgenden auch Planetengetriebestufe genannt ist.

JP 2018 066468 A, welche die Basis der zweiteiligen Form bildet, beschreibt ein Planetengetriebe und ein magisches 3K-Planetengetriebe mit geringem Spiel beim Anhalten oder Fixieren eines Eingangsteils, das in der Lage ist, ein Überlaufen oder eine Umkehrung der normalen Rotation zu verhindern.

Da Planetengetriebe kompakt und vielfältig einsetzbar sind, ist es auch üblich Planetengetriebe günstig herzustellen, wobei gewisse Fertigungstoleranzen in Kauf genommen werden. Bei solchen günstig hergestellten Planetengetrieben können die Fertigungstoleranzen zu erhöhtem Axialspiel zwischen den einzelnen miteinander kämmenden Teilen, also Rädern, auftreten.

Wenn dieses Axialspiel der einzelnen beweglichen Teile zueinander zu groß wird, können undefinierte Betriebszustände eingenommen werden, beispielsweise eine nur teilweise Überlappung von miteinander kämmenden Teilen. Dies führt unter Anderem zu einem erhöhten Verschleiß und sollte vermieden werden. Besonders bei mehrstufigen Palentengetriebebaugruppen kann sich dieses Axialspiel der einzelnen Planetengetriebe verstärken.

Hierzu ist es üblich, die kämmenden Teile axial so groß zu dimensionieren, dass eine teilweise axiale Überlappung nicht auftreten kann, sondern immer eine vollständige axiale Überlappung eingehalten ist. Dies führt jedoch zu großen Dimensionierungen und somit zu unerwünscht erhöhten Kosten. Aufgabe der Erfindung ist es, ein Axialspiel zwischen Zahnrädern eines kompakten Planetengetriebes zu minimieren und dennoch eine kostengünstige Fertigung zu erlauben.

Diese Aufgabe wird durch eine Planetengetriebebaugruppe gemäß dem Anspruch 1 gelöst.

Eine erfindungsgemäße Planetengetriebebaugruppe, insbesondere als Planetengetriebe, ist demnach dadurch gekennzeichnet, dass durch die magnetische Vorspannung zumindest der Planetenradträger einer ersten Planetengetriebestufe und der Planetenradträger einer zweiten Planetengetriebestufe axial gegeneinander verspannt sind. Auf diese Weise ist die relative axiale Position zwischen zwei miteinander im Eingriff befindlichen Teilen klar vorgegeben und definiert. Eine axiale Teilüberlappung und damit undefinierte Betriebszustände und höherer Verschleiß sind dadurch praktisch ausgeschlossen. Es ist daher möglich auch ein kostengünstig und somit toleranzbehaftet hergestelltes Planetengetriebe kompakt zu bauen.

Die magnetische Vorspannung besitzt den weiteren Vorteil, dass eine berührungslose Definition der relativen axialen Position erfolgt. Dadurch entsteht weder Reibung noch Verschleiß.

Dabei spielt es keine Rolle, ob die beiden miteinander in Eingriff befindlichen Getriebeteile, etwa Zahnräder, beide beweglich sind, oder ob eines der Getriebeteile, zumindest in axialer Richtung, feststeht. Beispielsweise kann in einem Planetengetriebe das Hohlrad feststehen. Die axiale Position kann nun zwischen Hohlrad und Planetenträger und/oder zwischen Planetenträger und Sonnenrad definiert sein.

Die axiale Position kann dabei direkt oder indirekt zwischen zwei miteinander in Eingriff befindlichen Rädern definiert sein. Beispielsweise ist es auch möglich, dass die axiale Position zwischen nicht miteinander in Eingriff stehenden Rädern definiert ist, etwa zwischen Sonnenrad und Hohlrad. Auf diese Weise ist die axiale Position der miteinander in Eingriff stehenden Räder indirekt festgelegt.

Die Planetengetriebebaugruppe kann allgemein ein Planetengetriebe bilden, beispielsweise mit oder ohne Gehäuse und/oder weiteren funktionellen Anbauten und/oder als einstufiges oder mehrstufiges Getriebe.

In einer Ausführung ist die magnetische Vorspannung gegenüber einem mit dem Gehäuse verbundenen, insbesondere drehbar gelagertem, Getriebeteil definiert. Auf diese Weise ist ein fester Bezugspunkt der axialen Position vorhanden, wodurch Bauteiltoleranzen weniger Einfluss auf die relativen und absoluten Positionen der einzelnen Räder bewirken.

In einer Ausführung sind durch die magnetische Vorspannung zumindest der Planetenradträger einer ersten Getriebestufe und der Planetenradträger einer zweiten Getriebestufe axial gegeneinander verspannt. Auf diese Weise können mehrere Getriebestufen zueinander axial ausgerichtet werden und so ein Axialspiel verhindert werden.

In einer Ausführung weist das Planetengetriebe wenigsten zwei Permanentmagnete auf, die so angeordnet sind, dass gleiche Magnetpole sich gegenüber angeordnet sind. Durch die magnetische Abstoßung zwischen den gleichartigen Magnetpolen entsteht eine Kraft, die eine axiale Position genau definiert. Ein weiterer Vorteil besteht darin, dass die abstoßende Kraft mit abnehmenden Abstand stark zunimmt. Eine Berührung der beiden Permanentmagneten ist damit praktisch ausgeschlossen, so dass die Position sicher eingehalten wird.

In einer Ausführung ist ein erster Permanentmagnet mit dem Planetenradträger verbunden. Auf diese Weise kann eine axiale Position des Planetenradträgers und somit der Planetenräder definiert sein. Der erste Permanentmagnet kann jedoch auch mit einem der anderen Räder des Planetengetriebes verbunden sein.

In einer Ausführung ist ein zweiter Permanentmagnet mit einem, insbesondere axial fixiertem, Getriebeteil, insbesondere außerhalb des Hohlrades, angeordnet. Auf diese Weise ist eine axiale Positionierung verschiedener Getriebeteile untereinander oder zwischen verschiedenen Getriebestufen möglich.

Jedenfalls sind der erste und der zweite Permanentmagnet so angeordnet, dass sich gleiche Magnetpole gegenüberstehen und die Permanentmagnete sich abstoßen.

Besonders vorteilhaft ist die Kombination, in der der erste Permanentmagnet mit dem Planetenradträger und der zweite Permanentmagnet mit einem, insbesondere axial, feststehenden Getriebeteil verbunden sind, wobei das Getriebeteil auch gegenüber dem Gehäuse drehbar sein kann. Auf diese Weise ist eine definierte Lage des Planetenträgers gegenüber einem Gehäuse sichergestellt. Da beispielsweise das Hohlrad ebenfalls fest am Gehäuse steht, ist eine definierte axiale Position des Planetenradträgers, also der Planetenräder, zum Hohlrad gegeben.

Die Permanentmagnete können nahezu beliebig geformt sein, und an geeigneter Stelle angeordnet sein.

In einer vorteilhaften Ausführung sind die Permanentmagnete als Ringmagnete ausgebildet, die jeweils koaxial zur Sonnenradwelle angeordnet sind. Auf diese Weise ist eine einfache Anordnung möglich und die abstoßende Kraft der Permanentmagnete wirkt in axialer Richtung zur Sonnenradwelle. Es entsteht somit kein Kippmoment durch die Magnetkraft, wodurch eventuell negative Auswirkungen auf die Räder entstehen könnten.

In einer Ausführung weist das Getriebe eine Aufnahme auf, in der beide Ringmagnete angeordnet sind. Diese Aufnahme bewirkt eine einfache Montage und eine definierte Position der Magnete. Somit ist eine axiale Positionierung der Räder ermöglicht.

In einer Ausführung weist das Planetengetriebe wenigstens zwei Getriebestufen auf, wobei jede Getriebestufe als Planetengetriebe ausgebildet ist und die axiale Position zwischen den beiden Getriebestufen durch die magnetische Vorspannung definiert ist. Somit kann auch beim axialen Zusammenfügen mehrerer Planetengetriebe eine Kompensation von Fertigungstoleranzen erfolgen und axiales Spiel minimiert werden.

Auf diese Weise kann beispielsweise zusätzlich auch die axiale Position eines Rades einer ersten Getriebestufe zu einem Rad einer zweiten Getriebestufe durch eine magnetische Vorspannung definiert werden.

In einer Ausführung sind die beiden Hohlräder der Planetengetriebestufen durch eine Rast- und/oder eine Schraubverbindung axial verbunden oder verbindbar. Auf diese Weise kann eine mehrstufige Planetengetriebebaugruppe aus mehreren, einfachen Planetengetrieben zusammengesetzt werden, in dem die einzelnen Planetengetriebe in axialer Richtung zusammengesteckt und/oder -geschraubt werden. Dadurch sind eine einfache Fertigung und eine einfache Montage möglich.

Die einzelnen Planetengetriebe der Getriebestufen können vorzugsweise gleich sein, so dass zusätzlich weniger unterschiedliche Teile oder Komponenten notwendig sind. Dadurch kann die Herstellung kostengünstiger und die Montage zusätzlich vereinfacht sein.

In einer Ausführung weist der Planetenträger einer ersten Planetengetriebestufe wenigstens eine in axialer Richtung auslenkbare Rastzunge auf. An dem Sonnenrad oder der Sonnenradwelle der zweiten Planetengetriebestufe ist eine umlaufende Nut angeordnet und die Rastzunge greift in die Nut ein, wenn die beiden Planetengetriebestufen miteinander verbunden sind.

Während des Verbindens der beiden Planetengetriebestufen lenkt das Sonnenrad oder die Sonnenradwelle die Rastzunge in axialer Richtung so weit aus, dass das Sonnenrad oder die Sonnenradwelle durch die Öffnung der Rastzunge hindurchpasst. Sobald die Rastzunge beim weiteren axialen Einführen die Nut erreicht, rastet die Rastzunge in der Nut ein und stellt so die axiale Verbindung her.

In einer Ausführung ist zwischen den Planetengetriebestufen eine magnetische Vorspannung ausgebildet wie oben beschrieben. Dadurch kann beispielsweise die axiale Position der Nut zur Rastzunge so definiert werden, dass im Betrieb keine Reibung oder Berührung vorliegt.

Die Erfindung ist nachfolgend anhand eines Ausführungsbeispiels mit Bezug auf die beiliegenden Zeichnungen näher erläutert. Dabei dient das Ausführungsbeispiel lediglich der Veranschaulichung und ist keineswegs einschränkend für die Erfindung.

Es zeigt:
- Fig. 1:: eine Schnittansicht eines Stellantriebs mit einer mehrstufigen Planetengetriebebaugrupe mit magnetischer axialer Vorspannung,
- Fig. 2:: ein Detail einer Schnittansicht des Stellantriebs der Fig. 1 im Bereich der Permanentmagnete zur axialen Vorspannung,
- Fig. 3:: eine geschnittene Schrägansicht eines Details einer Planetengetriebebaugruppe im Bereich der Permanentmagnete zur axialen Vorspannung,
- Fig. 4:: eine Schnittansicht eines Details eines Planetengetriebebaugruppe im Bereich der Permanentmagnete zur axialen Vorspannung,
- Fig. 5:: eine Schrägansicht einer Rastverbindung, und
- Fig. 6:: eine geschnittene Schrägansicht einer Planetengetriebebaugruppe mit einer Rastverbindung.

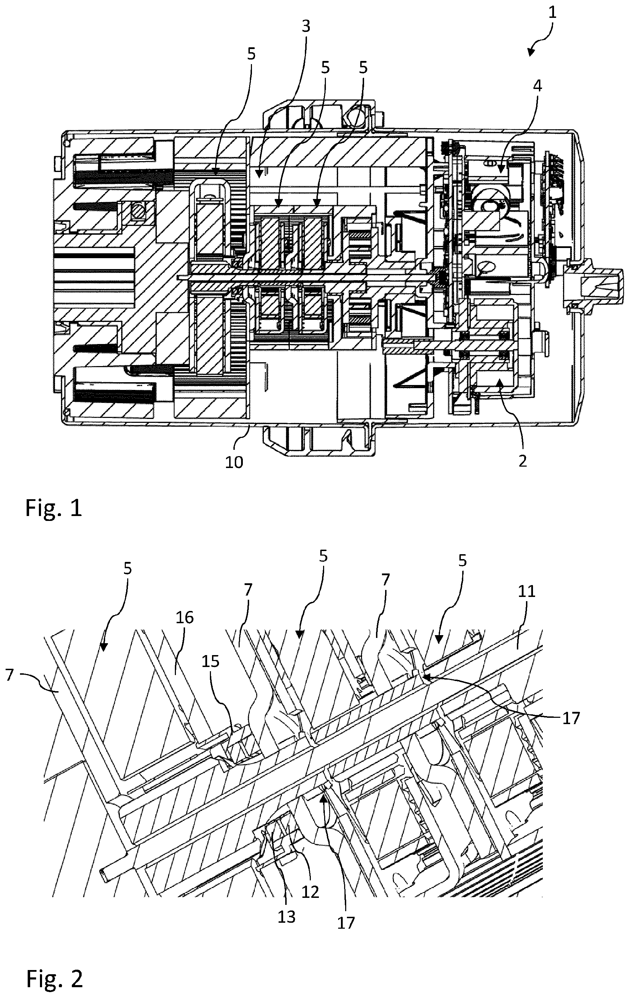

Die Fig. 1 zeigt eine Schnittansicht eines Stellantriebs 1 mit einem Antriebsmotor 2, einer Planetengetriebebaugruppe 3, einer Steuerelektronik 4 und einem Gehäuse 10 auf.

Der Antriebsmotor 2 sowie die zugehörige Steuerelektronik 4 sind für die Erfindung unerheblich, weshalb diese Elemente hier nicht weiter beschrieben sind. Die Erfindung ist daher in keiner Weise auf das Ausführungsbeispiel beschränkt.

Die Planetengetriebebaugruppe 3 weist drei Planetengetriebestufen 5 auf, die jeweils durch ein Planetengetriebe gebildet sind. Jedes Planetengetriebe 5 weist ein Hohlrad 6, einen Planetenradträger 7 mit drei Planetenrädern 8 und einem Sonnenrad 9 auf. Das Hohlrad 6 ist jeweils drehfest mit dem Gehäuse 10 verbunden. Das Sonnenrad 9 ist der Antrieb und der Planetenradträger 7 der Abtrieb jedes Planetengetriebes 5.

Die einzelnen Planetengetriebe 5 sind in axialer Richtung hintereinander angeordnet. Die Sonnenräder 9 sind hohlgebohrt, und auf einer Meldewelle 11 angeordnet.

Die einzelnen Planetengetriebe 5 können einfach und kostengünstig gefertigte Planetengetriebe sein. Um eventuell vorhandene Toleranzen und Axialspiele auszugleichen, weist im Beispiel das mittlere Planetengetriebe 5 eine magnetische axiale Vorspannung auf. Selbstverständlich könnte auch ein anderes oder auch mehrere der Planetengetriebe magnetisch vorgespannt sein.

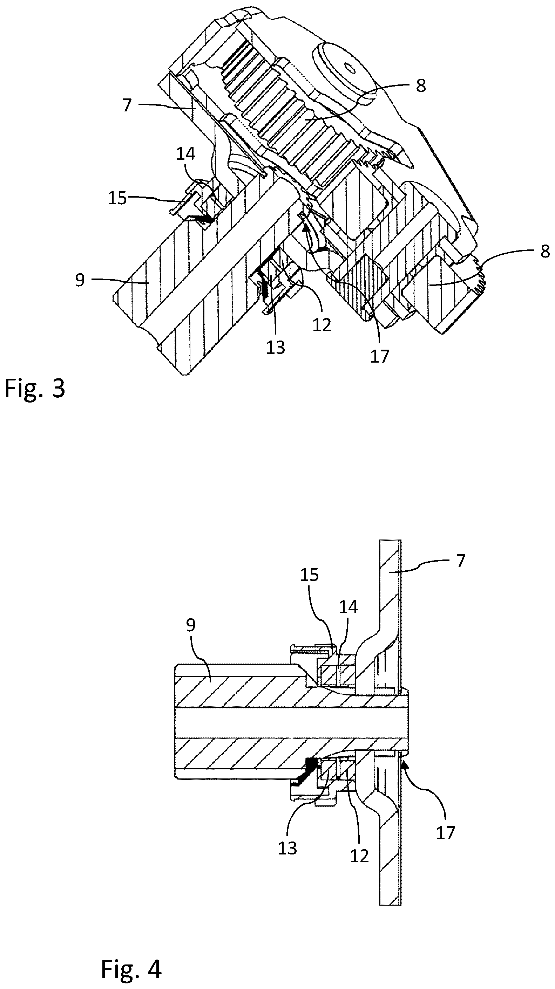

Die Fig. 2 bis 4 zeigt ein Detail dieses mittleren Planetengetriebes 5. Ein erster Permanentmagnet 12 ist hier mit dem Planetenradträger 7 des mittleren Planetengetriebes 5 verbunden. Der Planetenradträger 7 ist drehfest mit dem Sonnenrad 9 des Planetengetriebes 5 der nächsten Getriebestufe verbunden.

Im Beispiel ist der erste Permanentmagnet 12 als Ringmagnet ausgebildet, der koaxial um dieses Sonnenrad 9 herum angeordnet ist.

Ein zweiter Permanentmagnet 13 ist ebenfalls als Ringmagnet ausgebildet und koaxial um das Sonnenrad 9 herum angeordnet. Dieser zweite Permanentmagnet 13 ist drehfest mit einem Getriebeteil 16 verbunden. Dieses Getriebeteil 16 ist in axialer Richtung gegenüber dem Gehäuse 10 fixiert, jedoch drehbar innerhalb des Gehäuses 10 angeordnet. Die beiden Permanentmagnete 12 und 13 sind durch einen Luftspalt 14 getrennt, wobei gleichpolige Magnetpole sich gegenüber liegen. Die Permanentmagnete 12, 13 können dazu beispielsweise in axialer Richtung magnetisiert sein, wobei eine Stirnseite der Nordpol und die gegenüberliegende Stirnseite der Südpol ist. Auf diese Weise kann das Sonnenrad 9 zusammen mit dem Planetenradträger 7 durch die Magnetkraft innerhalb des Getriebeteils 16 in axialer Richtung verschoben werden.

Die beiden Permanentmagnete 12, 13 laufen in einer Aufnahme 15, die beispielsweise aus Kunststoff gefertigt ist. Die Aufnahme 15 umgibt die Permanentmagnete 12, 13 am äußeren Umfang und schützt diese vor Umgebungseinflüssen.

Durch die gegenüberliegende Anordnung gleicher Magnetpole entsteht eine abstoßende, magnetische Kraft in axialer Richtung, die eine axiale relative Position zwischen dem Planetenradträger 7 in Bezug auf das Getriebeteil 16 definiert. Da das Hohlrad 6 des mittleren Planetengetriebes 5 ebenfalls drehfest mit dem Gehäuse 10 verbunden ist, wird somit indirekt die axiale Position zwischen den Planetenrädern 8 und dem Hohlrad 6 des mittleren Planetengetriebes 5 definiert.

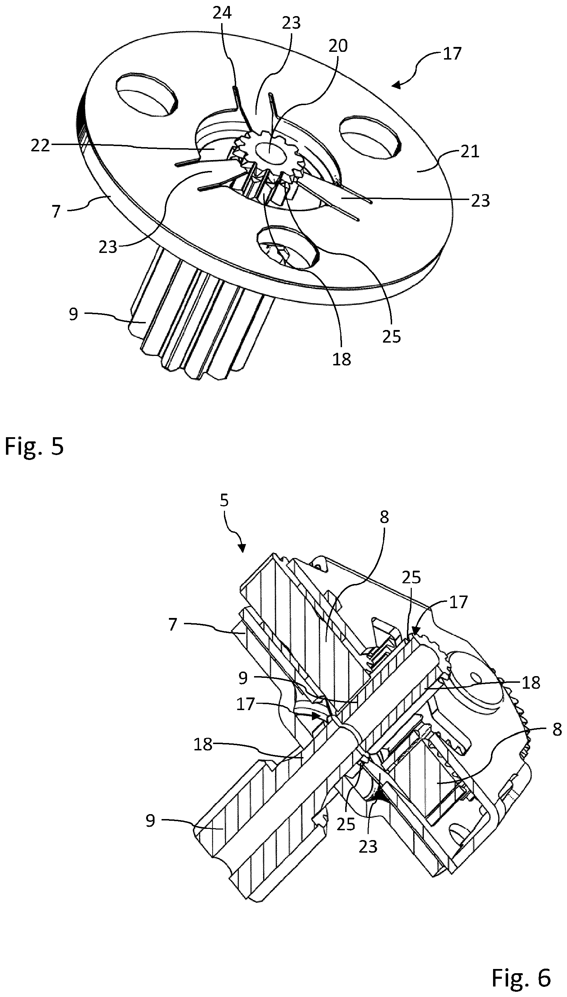

Teile der einzelnen Planetengetriebe 5 sind im Beispiel jeweils durch eine Rastverbindung 17 axial miteinander verbunden. Die Fig. 5 und 6 zeigen jeweils eine solche Rastverbindung.

Das Sonnenrad 9 ist im Beispiel einteilig mit einer Sonnenradwelle 18 ausgebildet, wobei die Sonnenradwelle 18 einseitig in axialer Richtung über das Sonnenrad 9 hinaus verlängert ist. Die Sonnenradwelle 18 besitzt eine axiale Achsbohrung 20 zur Aufnahme einer Meldewelle 11. Im Beispiel der Fig. 5 besitzt das Sonnenrad 9 einen größeren Durchmesser als die Sonnenradwelle 18.

Wie in Fig. 6 zu sehen ist, kann das Sonnenrad 9 auch den gleichen Durchmesser aufweisen wie die Sonnenradwelle 18.

Der Planetenradträger 7 ist im Beispiel drehfest mit der Sonnenradwelle 18 verbunden. Das Sonnenrad 9 gehört dabei zum Planetengetriebe einer nachfolgenden Getriebestufe. Der Planetenradträger 7 ist im Beispiel scheibenförmig ausgebildet. Das freie Ende der Sonnenradwelle 18, also die axiale Verlängerung der Sonnenradwelle 18, steht in axialer Richtung über den Planetenradträger 7 hinaus.

Im Bereich der Verbindung zur Sonnenradwelle 18 weist der Planetenradträger eine topfförmige Absenkung 19 auf. Im Beispiel weist die Sonnenradwelle 18 eine Verzahnung 26 auf, durch die eine drehfeste Verbindung mit dem Planetenradträger 7 einfach realisierbar ist. Hierzu weist die Absenkung 19 eine entsprechende Verzahnung auf. Gleichzeigt ist es dadurch möglich, den Planetenradträger 7 in axialer Richtung auf die Sonnenradwelle 18 aufzustecken.

Auf dem Planetenradträger 7 ist weiter eine Scheibe 21 angeordnet, die eine koaxiale Öffnung 22 aufweist. Der Durchmesser der Öffnung 22 ist jedenfalls größer als der Durchmesser der Sonnenradwelle 18 Das freie Ende der Sonnenradwelle 18 ist durch diese Öffnung 22 hindurchgeführt und steht in axialer Richtung über diese Scheibe 21 hinaus. An der Öffnung 22 sind drei Rastzungen 23 in gleichmäßigem Abstand am Umfang verteilt angeordnet. Die Rastzungen 23 sind radial ausgerichtet und als Federzungen ausgebildet. Die Rastzungen 23 sind im Beispiel durch Schlitze 24 in der Scheibe 21 verlängert. Alternativ könnte auch die Öffnung einen größeren Durchmesser besitzen, um die Rastzungen zu verlängern. Die Rastzungen 23 sind im Beispiel radial zur Öffnung ausgerichtet, wobei jedoch auch eine andere Ausrichtung möglich ist.

Die Sonnenradwelle 18 weist eine umlaufende Rastnut 25 auf, in die die Rastzungen 23 eingreifen, wenn zwei solche Planetengetriebe miteinander verbunden sind.

Beim Aufstecken des Planetenradträgers 7 auf die Sonnenradwelle 18 werden die Rastzungen 23 durch das freie Ende der Sonnenradwelle 18 so weit axial ausgelenkt, dass die Sonnenradwelle 18 an den Rastzungen 23 entlang bewegt werden kann. Sobald die Rastzungen 23 die Rastnut 25 erreichen, rasten sie dort ein.

Vorzugsweise weist das freie Ende der Sonnenradwelle 18 eine Fase oder Abrundung auf, die das Einführen erleichtern kann.

Durch die Rastverbindung 17 ist es einfach möglich, mehrere Planetengetriebe axial miteinander zu verbinden, um so ein mehrstufiges Planetengetriebe zu erhalten. Dabei können die einzelnen Sonnenradwellen 18 und die Planetenradträger 7 der einzelnen Getriebestufen nacheinander auf die Meldewelle 11 aufgeschoben werden, wobei sie durch die Rastverbindung 17 in axialer Richtung miteinander verbunden werden.

### Bezugszeichenliste

- 1: Stellantrieb
- 2: Antriebsmotor
- 3: Planetengetriebebaugruppe
- 4: Steuerelektronik
- 5: Planetengetriebe, Getriebestufe, Planetengetriebestufe
- 6: Hohlrad
- 7: Planetenradträger
- 8: Planetenrad
- 9: Sonnenrad
- 10: Gehäuse
- 11: Achse, Meldewelle
- 12: erster Permanentmagnet
- 13: zweiter Permanentmagnet
- 14: Luftspalt
- 15: Aufnahme
- 16: Gehäuseteil, Getriebeteil
- 17: Rastverbindung
- 18: Sonnenradwelle
- 19: Absenkung
- 20: Achsbohrung
- 21: Scheibe
- 22: Öffnung
- 23: Rastzunge
- 24: Schlitz
- 25: Rastnut

## Patentansprüche

1. Planetengetriebebaugruppe (3) umfassend zumindest zwei Planetengetriebestufen (5) mit jeweils einem Sonnenrad (9), einem Hohlrad (6) und einem Planetenradträger (7) mit mehreren, vorzugsweise drei, Planetenrädern (8), wobei eine axiale Position von zwei sich im Eingriff befindlichen Getriebeteilen zueinander durch eine magnetische Vorspannung definiert ist, **dadurch gekennzeichnet, dass** durch die magnetische Vorspannung zumindest der Planetenradträger (7) einer ersten Planetengetriebestufe (5) und der Planetenradträger (7) einer zweiten Planetengetriebestufe (5) axial gegeneinander verspannt sind.

2. Planetengetriebebaugruppe (3) nach Anspruch 1, **dadurch gekennzeichnet, dass** die magnetische Vorspannung gegenüber einem mit dem Gehäuse (10) verbundenen, insbesondere drehbar gelagertem, Getriebeteil (16) definiert ist.

3. Planetengetriebebaugruppe (3) nach einem der vorangehenden Ansprüche, **dadurch gekennzeichnet, dass** das Planetengetriebe (3) wenigsten zwei Permanentmagnete (12, 13) aufweist, die so angeordnet sind, dass gleiche Magnetpole sich gegenüberstehen.

4. Planetengetriebebaugruppe (3) nach Anspruch 3, **dadurch gekennzeichnet, dass** ein erster Permanentmagnet (12) mit dem Planetenradträger (7) verbunden ist und/oder dass ein zweiter Permanentmagnet (13) mit einem, insbesondere axial fixierten, Getriebeteil (16) verbunden ist, insbesondere außerhalb des Hohlrades (6).

5. Planetengetriebebaugruppe (3) nach Anspruch 3 oder 4, **dadurch gekennzeichnet, dass** die Permanentmagnete (12, 13) als Ringmagnete ausgebildet sind, die jeweils koaxial zu einer Sonnenradwelle (18) angeordnet sind.

6. Planetengetriebebaugruppe (3) nach Anspruch 5, **dadurch gekennzeichnet, dass** das Planetengetriebe (3) eine Aufnahme (15) aufweist, in der beide Ringmagnete (12, 13) angeordnet sind.

7. Planetengetriebebaugruppe (3) nach einem der vorangehenden Ansprüche, **dadurch gekennzeichnet, dass** die zumindest zwei Planetengetriebestufen (5) durch eine Rastverbindung (17) axial verbunden oder verbindbar sind.

8. Planetengetriebebaugruppe (3) nach Anspruch 7, **dadurch gekennzeichnet, dass** der Planetenradträger (7) einer ersten Getriebestufe (5) wenigstens eine in axialer Richtung auslenkbare Rastzunge (23) aufweist, dass an dem Sonnenrad (9) oder der Sonnenradwelle (18) einer zweiten Planetengetriebestufe (5) eine umlaufende Rastnut (25) angeordnet ist und dass die Rastzunge (23) in die Rastnut (25) eingreift, wenn die beiden Planetengetriebestufen miteinander verbunden sind.

9. Planetengetriebebaugruppe (3) nach Anspruch 7 oder 8, **dadurch gekennzeichnet, dass** die Rastzunge (23) an einer koaxialen Öffnung (22) angeordnet ist, durch die das Sonnenrad (9) oder die Sonnenradwelle (18) durchführbar oder durchgeführt ist.

10. Planetengetriebebaugruppe (3) nach einem der Ansprüche 7 bis 9, **dadurch gekennzeichnet, dass** an der Öffnung (22) drei Rastzungen (23) angeordnet sind, insbesondere wobei die Rastzungen (23) gleichmäßig am Umfang der Öffnung (22) verteilt sind.

11. Stellantrieb (1) mit einer Planetengetriebebaugruppe (3) nach einem der vorangehenden Ansprüche.

## Claims

1. Planetary gear assembly comprising at least two planetary gear stages (5), each having a sun gear (9), a ring gear (6), and a planet carrier (7) with multiple, preferably three, planet gears (8), wherein an axial position of two gear components in meshing engagement relative to one another is defined by a magnetic preload, **characterized in that**, due to the magnetic preload, at least the planet carrier (7) of a first planetary gear stage (5) and the planet carrier (7) of a second planetary gear stage (5) are axially preloaded against one another.

2. Planetary gear assembly (3) according to claim 1, **characterized in that** the magnetic preload is defined relative to a gear component (16) connected to the housing (10), in particular one mounted for rotation.

3. Planetary gear assembly (3) according to one of the preceding claims, **characterized in that** the planetary gear (3) comprises at least two permanent magnets (12, 13) arranged such that like magnetic poles face each other.

4. Planetary gear assembly (3) according to claim 3, **characterized in that** a first permanent magnet (12) is connected to the planet carrier (7) and/or **in that** a second permanent magnet (13) is connected to a gear component (16), in particular one that is axially fixed, in particular outside the ring gear (6).

5. Planetary gear assembly (3) according to claim 3 or 4, **characterized in that** the permanent magnets (12, 13) are designed as ring magnets, each of which is arranged coaxially with a sun gear shaft (18).

6. Planetary gear assembly (3) according to claim 5, **characterized in that** the planetary gear assembly (3) comprises a mount (15) in which both ring magnets (12, 13) are arranged.

7. Planetary gear assembly (3) according to one of the preceding claims, **characterized in that** the at least two planetary gear stages (5) are axially connected or connectable by a snap-fit connection (17).

8. Planetary gear assembly (3) according to claim 7, **characterized in that** the planet carrier (7) of a first gear stage (5) comprises at least one detent tongue (23) deflectable in the axial direction, **in that** a circumferential detent groove (25) is arranged on the sun gear (9) or the sun gear shaft (18) of a second planetary gear stage (5) and **in that** the detent tongue (23) engages in the detent groove (25) when the two planetary gear stages are connected to one another.

9. Planetary gear assembly (3) according to claim 7 or 8, **characterized in that** the detent tongue (23) is arranged at a coaxial opening (22) through which the sun gear (9) or the sun gear shaft (18) can be passed or is passed.

10. Planetary gear assembly (3) according to one of claims 7 to 9, **characterized in that** three detent tongues (23) are arranged at the opening (22), in particular wherein the detent tongues (23) are evenly distributed around the circumference of the opening (22).

11. Actuator (1) comprising a planetary gear assembly (3) according to one of the preceding claims.

## Revendications

1. Module de train planétaire (3) comprenant au moins deux étages de train planétaire (5) comprenant chacun une roue solaire (9), une couronne de train planétaire (6) et un porte-satellites (7) avec plusieurs, de préférence trois, pignons satellites (8), dans lequel une position axiale de deux parties d'engrenage engrenées l'une dans l'autre est définie par une précontrainte magnétique, **caractérisé en ce que** la précontrainte magnétique contraint au moins le porte-satellites (7) d'un premier étage de train planétaire (5) et le porte-satellites (7) d'un deuxième étage de train planétaire (5) l'un vers l'autre dans le sens axial.

2. Module de train planétaire (3) selon la revendication 1, **caractérisé en ce que** la précontrainte magnétique est définie par rapport à une partie d'engrenage (16) reliée au carter (10), en particulier supportée avec possibilité de rotation.

3. Module de train planétaire (3) selon l'une des revendications précédentes, **caractérisé en ce que** le train planétaire (3) comporte au moins deux aimants permanents (12, 13) qui sont disposés de telle manière que les mêmes pôles magnétiques soient l'un en face de l'autre.

4. Module de train planétaire (3) selon la revendication 3, **caractérisé en ce qu'**un premier aimant permanent (12) est relié au porte-satellites (7) et/ou **en ce qu'**un deuxième aimant permanent (13) est relié à une partie d'engrenage (16), en particulier fixée dans le sens axial, en particulier à l'extérieur de la couronne de train planétaire (6).

5. Module de train planétaire (3) selon la revendication 3 ou 4, **caractérisé en ce que** les aimants permanents (12, 13) sont conçus comme des aimants toriques qui sont disposés chacun de façon coaxiale par rapport à un axe de roue solaire (18).

6. Module de train planétaire (3) selon la revendication 5, **caractérisé en ce que** le train planétaire (3) comporte un logement (15) dans lequel les deux aimants toriques (12, 13) sont disposés.

7. Module de train planétaire (3) selon l'une des revendications précédentes, **caractérisé en ce que** les au moins deux étages de train planétaire (5) sont reliés ou peuvent être reliés dans le sens axial par un assemblage enclenché (17).

8. Module de train planétaire (3) selon la revendication 7, **caractérisé en ce que** le porte-satellites (7) d'un premier étage d'engrenage (5) comporte au moins une patte d'enclenchement (23) pouvant être déviée dans le sens axial, **en ce qu'**une rainure d'enclenchement (25) circonférentielle est disposée sur la roue solaire (9) ou l'axe de roue solaire (18) d'un deuxième étage de train planétaire (5) et **en ce que** la patte d'enclenchement (23) se met en prise dans la rainure d'enclenchement (25) quand les deux étages de train planétaire sont reliés l'un à l'autre.

9. Module de train planétaire (3) selon la revendication 7 ou 8, **caractérisé en ce que** la patte d'enclenchement (23) est disposée au niveau d'une ouverture coaxiale (22) à travers laquelle la roue solaire (9) ou l'axe de roue solaire (18) peut être passé ou est passé.

10. Module de train planétaire (3) selon l'une des revendications 7 à 9, **caractérisé en ce que** trois pattes d'enclenchement (23) sont disposées au niveau de l'ouverture (22), les pattes d'enclenchement (23) étant en particulier réparties à intervalles réguliers sur la circonférence de l'ouverture (22).

11. Entraînement de commande (1) muni d'un module de train planétaire (3) selon l'une des revendications précédentes.
